# EUROPEAN PATENT APPLICATION

(11) **EP 3 133 716 A1**
(43) Date of publication of application: **22.02.2017**
(21) Application number: 15779361.3
(22) Date of filing: 15.04.2015
(51) Int. Cl.: H02K 1/12, H02K 1/18

(54) **EFFICIENT MOTOR STATOR MADE OF ORIENTED SILICON STEEL SHEETS**

(30) Priority: 17.04.2014 CN 201410154733
(71) Applicant: Lin, Zijin, Yuhuan County, Taizhou, Zhejiang 317604 (CN); Chen, Huanping, Chenyu, Damaiyu Sub-District Office Yuhuan County, Taizhou Zhejiang 317604 (CN); Chen, Shuangying, Chenyu, Damaiyu Sub-District Office Yuhuan County, Taizhou Zhejiang 317604 (CN)
(72) Inventor: LIN, Zijin, Yuhuan County Taizhou Zhejiang 317604 (CN)
(74) Representative: Elzaburu S.L.P.
(86) International application number: PCT/CN2015/076618
(87) International publication number: WO 2015/158256

(57) **Abstract**

A high efficiency electric motor stator manufactured with grain-oriented silicon steel sheets. It comprises a grain-oriented silicon steel sheet group, and fixation sheets for the stator core secured on both sides of the grain-oriented silicon steel sheet group. The grain-oriented silicon steel sheet group is formed by stagger-stacking the forward oriented silicon steel sheet layers and the reverse oriented silicon steel sheet layers alternatingly. The forward oriented silicon steel sheet layers and the reverse oriented silicon steel sheet layers are both formed by arranging and enclosing the grain-oriented silicon steel sheets in a circular manner, with the grain orientation being in the radial direction. The present invention changes the conventional grain-oriented silicon steel sheets of a high magnetic induction and a low core loss, into small sized stamping parts, and then takes advantage of a specific structure to arrange them, so as to greatly improve the motor's efficiency.

## Description

### Background of the invention

### Field of Invention

The present invention relates to the technical field of electric motors, electric motor stators, and particularly to a high efficiency electric motor stator manufactured with grain-oriented silicon steel sheets.

### Related Art

The existing electric motor stators adopt non-oriented silicon steel sheets, and the efficiency is generally in the range of 60~80%. Especially for the pure electric cars, its revolution speed is always changing, and the required torque is big, which makes the efficiency of common motors much lower, because the core loss of non-oriented silicon steel sheets is fairly large, over 2.0W/Kg in general, and the magnetic induction intensity is not high, with B50 at 1.75T. The non-oriented silicon steel sheets are mainly used in the stator and rotor of the equipment like electric motors, compressors, large sized water turbine generator sets and etc., while the grain-oriented silicon steel sheets are generally used in the core of transformers. In industrial productions, the grain-oriented silicon steel sheets of a high magnetic induction and a low core loss have not been directly applied to electric motors yet.

### Summary of the invention

One object of one embodiment of the present invention is to avoid the technical defects stated above, and to provide a high efficiency electric motor stator manufactured with grain-oriented silicon steel sheets.

In order to solve the technical issues stated above, one object of one embodiment of the present invention can be achieved by the following technical proposal:
A high efficiency electric motor stator manufactured with grain-oriented silicon steel sheets comprises a grain-oriented silicon steel sheet group, and fixation sheets for the stator core secured on both sides of the grain-oriented silicon steel sheet group. The said grain-oriented silicon steel sheet group is formed by stagger-stacking the forward oriented silicon steel sheet layers and the reverse oriented silicon steel sheet layers. The said forward oriented silicon steel sheet layers and the reverse oriented silicon steel sheet layers are both formed by arranging and enclosing the grain-oriented silicon steel sheets in a circular manner, with the grain orientation being in the radial direction. There are fixation holes designed on each grain-oriented silicon steel sheet. The said forward oriented silicon steel sheet layers and reverse oriented silicon steel sheet layers are skewered through the fixation holes on the grain-oriented steel sheets, and then secured to the fixation sheet of the stator core.

Further, all forward oriented silicon steel sheet layers and reverse oriented silicon steel sheet layers are secured to the fixation sheets of the stator core by skewering with rivets.

Further, there are air gaps between each grain-oriented silicon steel sheet in the forward oriented silicon steel sheet layers, and there are air gaps between each grain-oriented silicon steel sheet in the reverse oriented silicon steel sheet layers as well.

Some benefits of the present invention are:
The conventional grain-oriented silicon steel sheets of a high magnetic induction and a low core loss are changed into small sized stamping parts, and then a specific structure is taken advantage of to arrange them, so as to greatly improve the motor's efficiency. In general, the efficiency is over 85%. With the same input power, the torque is over 1/3 times bigger than that of electric motors of the same type. Especially for the revolution speed, it could be over 100,000 revolutions per hour. Besides, the well arranged grain-oriented silicon steel sheets are secured to the fixations sheets by rivets. The manufacturing process is simple, and the performance of the production is better than that of a joint structure.

### Brief description of the drawings

Fig. 1 is a top view of one silicon steel sheet of the external stator core of a common electric motor.
Fig. 2 is a top view of the external stator core of the electric motor of Fig. 13 in one embodiment of the present invention.
Fig. 3 is a top view of the arrangement of the forward oriented silicon steel sheet layer of the external stator core of the electric motor in one embodiment of the present invention.
Fig. 4 is a top view of the arrangement of the reverse oriented silicon steel sheet layer of the external stator core of the electric motor in one embodiment of the present invention.
Fig. 5 is a top view of the stamping part of one of the grain-oriented silicon steel sheets of the external stator core of the electric motor in one embodiment of the present invention.
Fig. 6 is a top view of the fixation sheet of the external stator core of the electric motor in one embodiment of the present invention.
Fig. 7 is a sectional view of the internal stator core of the electric motor in one embodiment of the present invention.
Fig. 8 is a top view of the arrangement of the forward oriented silicon steel sheet layer of the internal stator core of the electric motor in one embodiment of the present invention.
Fig. 9 is a top view of the arrangement of the reverse oriented silicon steel sheet layer of the internal stator core of the electric motor in one embodiment of the present invention.
Fig. 10 is a top view of the stamping part of the silicon steel sheets of the internal stator core of the electric motor in one embodiment of the present invention.
Fig. 11 is a top view of the fixation sheet of the internal stator core of the electric motor in one embodiment of the present invention.
Fig. 12 is a side view of the rivet on the stator core of the electric motor in one embodiment of the present invention.
Fig. 13 is a perspective schematic view of the stator core of the electric motor in one embodiment of the present invention.
Fig. 14 is a schematic view of the stagger-stacking arrangements of the forward oriented silicon steel sheet layers and the reverse oriented silicon steel sheet layers of the stator core of the electric motor in one embodiment of the present invention.

### Detailed description of the invention

Embodiments of this invention will be described below and the invention will be further illustrated in connection with the accompanying figures.

### First Embodiment

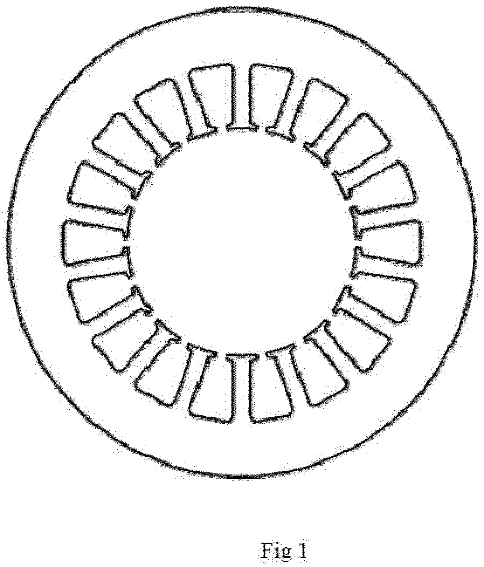

Fig. 1 shows the existing stator core manufactured with non-oriented silicon steel sheets. Each of its layers forms a complete silicon steel sheet layer. If the non-oriented silicon steel sheet is directly replaced by the grain-oriented silicon steel sheet (4), in the direction parallel to the grain orientation of the grain-oriented silicon steel sheet (4), the efficiency is very high; however, when in the direction other than the grain orientation, the efficiency is very low. Therefore, the existing structure does not allow directly application of the grain-oriented silicon steel sheets (4) to electric motors.

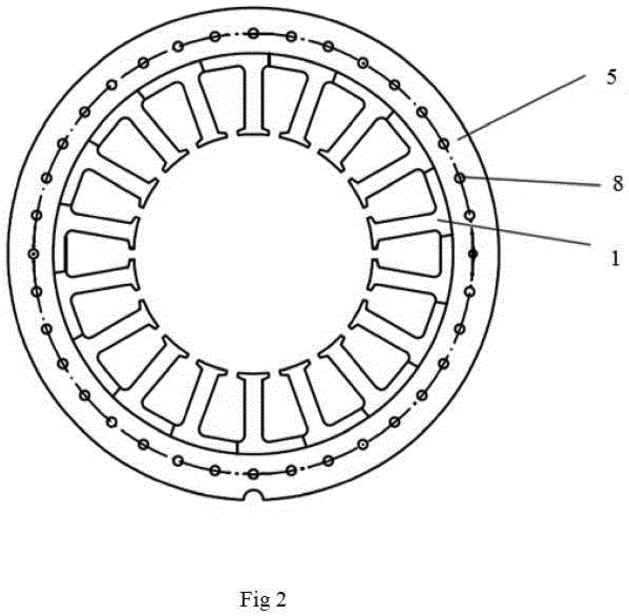

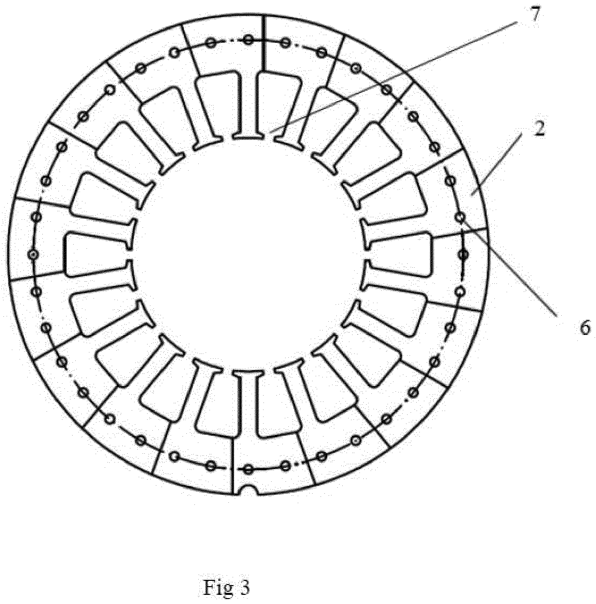

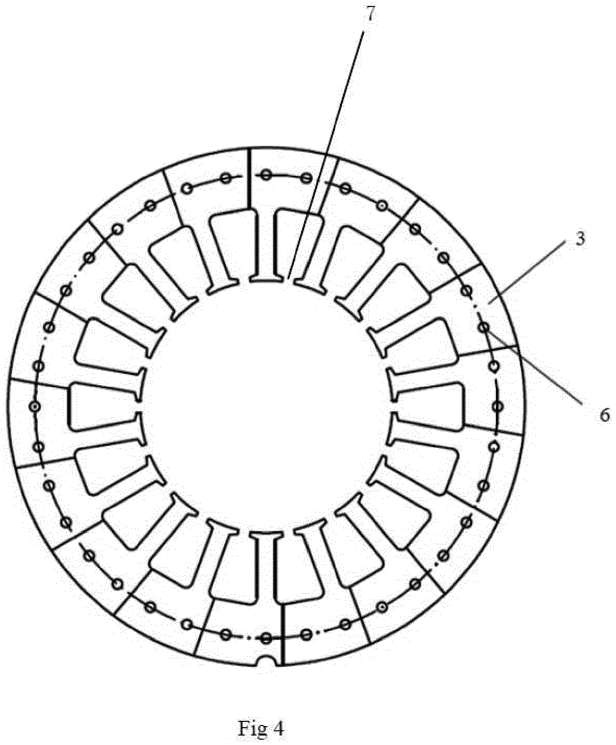

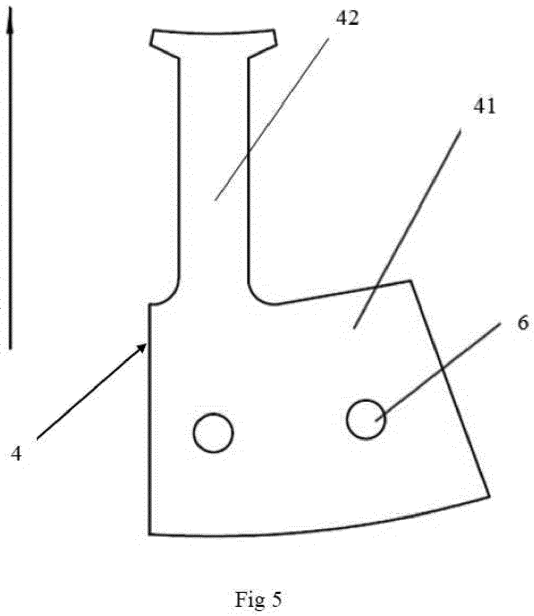

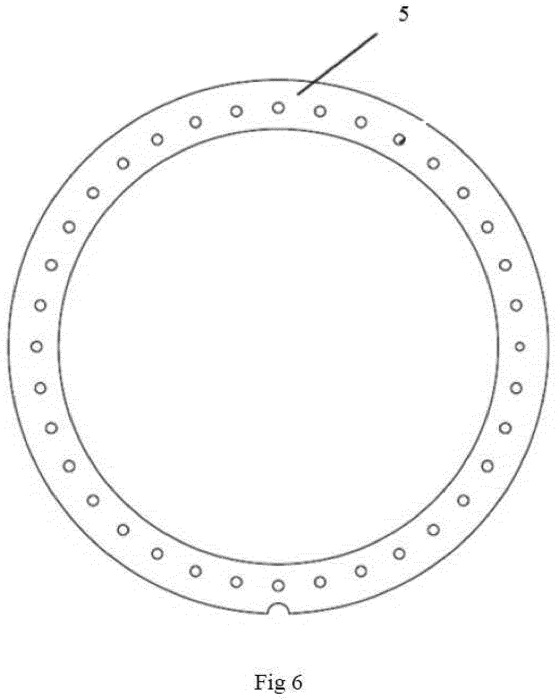

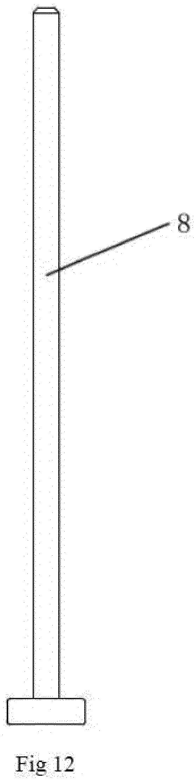

As shown in Fig. 2 through Fig. 4, one embodiment is the external stator core of an electric motor. It comprises a grain-oriented silicon steel sheet group (1), and fixation sheets (5) for the external stator core secured on both sides of the grain-oriented silicon steel sheet group (1). The said grain-oriented silicon steel sheet group (1) is formed by stacking the forward oriented silicon steel sheet layers (2) and the reverse oriented silicon steel sheet layers (3) successively. Fig.3 shows the arrangement of the forward oriented silicon steel sheet layers (2), and Fig. 4 shows the arrangement of the reverse oriented silicon steel sheet layers (3). The forward oriented silicon steel sheet layers (2) and the reverse oriented silicon steel sheet layers (3) are stacked successively. The specific number of layers may be configured according to the actual situation of the electric motor. As shown in Fig. 3 through Fig. 6, the forward oriented silicon steel sheet layers (2) and the reverse oriented silicon steel sheet layers (3) are both formed by arranging and enclosing the grain-oriented silicon steel sheets (4) in a circular manner, with the grain orientation being in the radial direction. There are air gaps (7) designed between each grain-oriented silicon steel sheet (4) in the forward oriented silicon steel sheet layers (2) and/or in the reverse oriented silicon steel sheet layers (3), which make magnetic ends of two adjacent grain-oriented silicon steel sheets in the same layer not linked with each other. As shown in Fig. 5, the arrow indicates the grain orientation of the stamping parts of the grain-oriented silicon steel sheets (4). There are fixation holes (6) designed on each grain-oriented silicon steel sheet (4). The forward oriented silicon steel sheet layers (2) and reverse oriented silicon steel sheet layers (3) are skewered through the fixation holes (6) on the grain-oriented steel sheets (4), and then secured to the fixation sheet of the external stator core (5). As shown in Fig. 12, all forward oriented silicon steel sheet layers (2) and reverse oriented silicon steel sheet layers (3) are secured to the fixation sheet (5) of the external stator core by skewering with rivets (8).

As shown in Fig. 5, a grain-oriented silicon steel sheet (4) comprises a yoke part (41) and a field pole part (42). The yoke part (41) and the field pole part (42) are integrally formed. The yoke part (41) is an arc-shaped sheet, and the field pole part (42) is provided to one side of the yoke part (41), forming eccentric structure, and the orientation of the field pole part (42) is the same as the radial direction of the yoke part (41). The length of the field pole part (41) is greater than the radial width of the yoke part (41).

In existing technologies, if the grain-oriented silicon steel sheets (4) are used as the core, the magnetic flux is increased, and the core loss is reduced; however, when applied in electric motors, because of the existence of the oriented magnetism, the normal operation of the electric motor will be affected. Therefore, in one embodiment, the field pole parts (4) of the forward oriented silicon steel sheet layers (2) and field pole parts (4) of the reverse oriented silicon steel sheet layers (3) stack up successively, so that the two opposite oriented magnetism mutually cancel out. However, the internal oriented structure still exists as usual, so it can be applied to electric motors. This increases the magnetic flux, reduces the core loss and improves the performance of the electric motor.

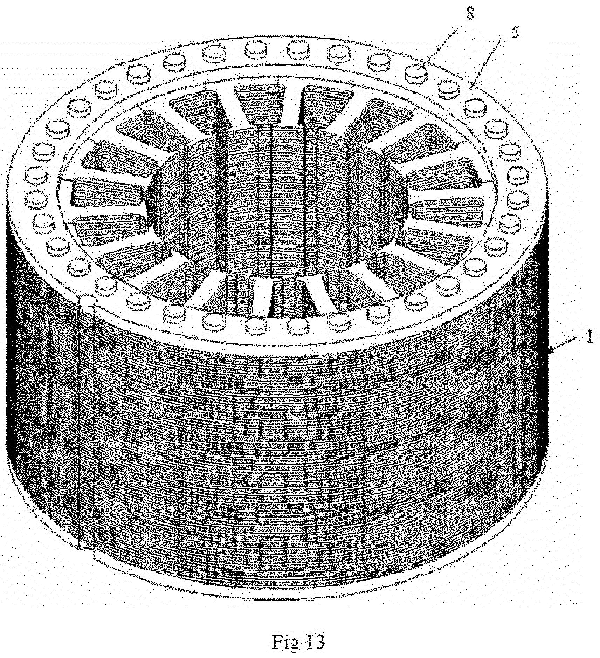

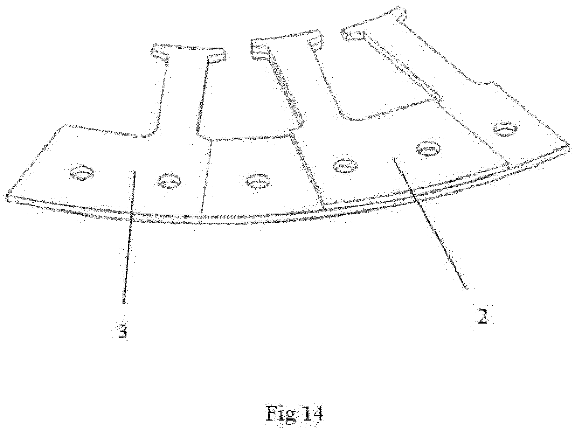

As shown in Fig. 5, Fig. 13, and Fig. 14, the field pole part (42) is close to one side of the yoke part (41), and the field pole part (42) is offset relative to the yoke part (41). While the field pole parts (42) overlap with each other, the yoke parts (41) stagger across the layers with each other, so the eddy current is reduced. Further, in this technical proposal, the core of the electric motor uses multiple forward oriented silicon steel sheet layers (2) and reverse oriented silicon steel sheet layers (3), rather than one single cast iron, which reduces the eddy current effect. Each forward oriented silicon steel sheet layer (2) and each reverse oriented silicon steel sheet layer (3) is formed by combining multiple grain-oriented silicon steel sheets (4), so as to further avoid creating strong eddy currents in the whole core. Hence, the heat generation in the yoke part is reduced, and the core loss decreases.

In addition, in one embodiment, the yoke part (41) of the grain-oriented silicon steel sheet (4) in the forward oriented silicon steel sheet layer (2) stagger across the layers with the yoke part (41) of the grain-oriented silicon steel sheet (4) in the reverse oriented silicon steel sheet layer (3). Coupled with the fixation sheets (5) of the external stator core, this doubles the fixation achieved in the axial direction, which makes the assembly simpler.

In one embodiment, the air gap (7) is located between the magnetic ends of the field pole parts (42) of two adjacent grain-oriented silicon steel sheets (4).

### Second Embodiment

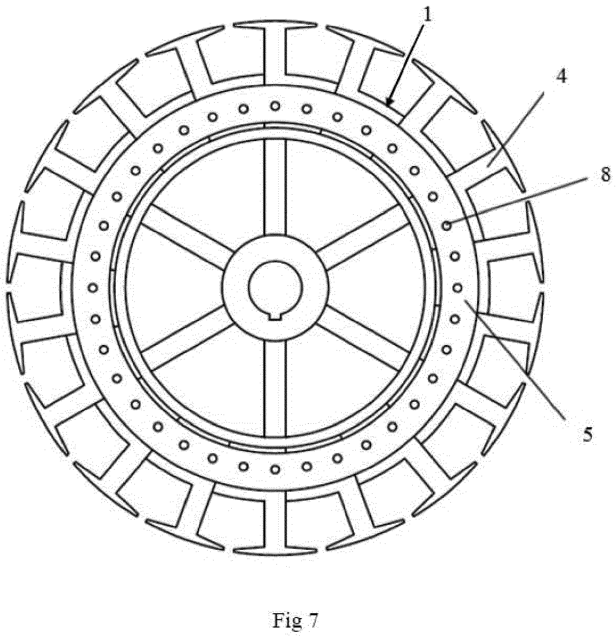

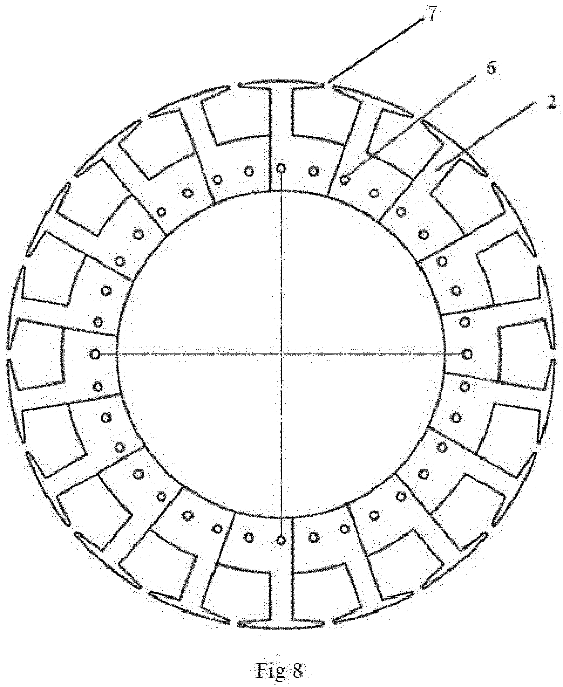

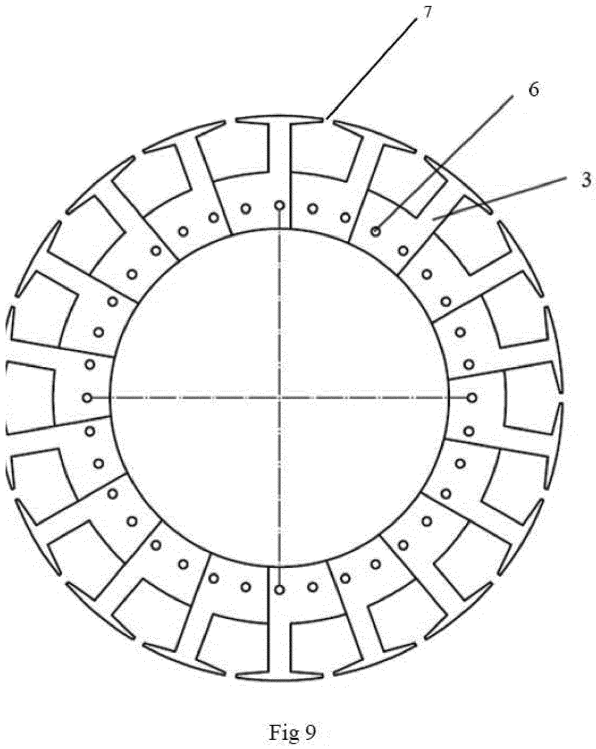

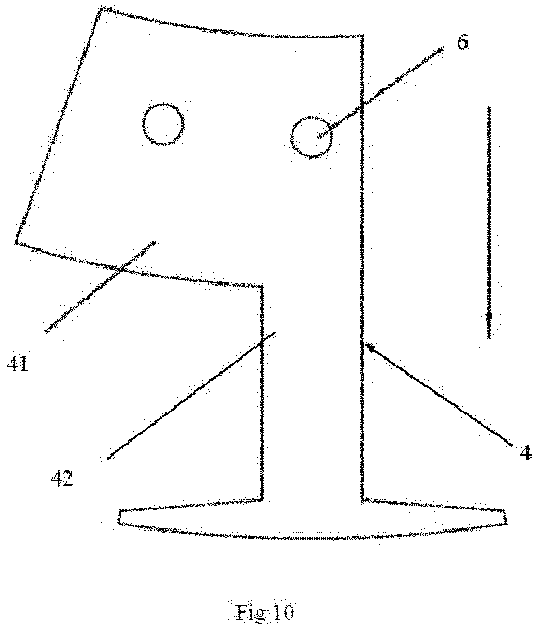

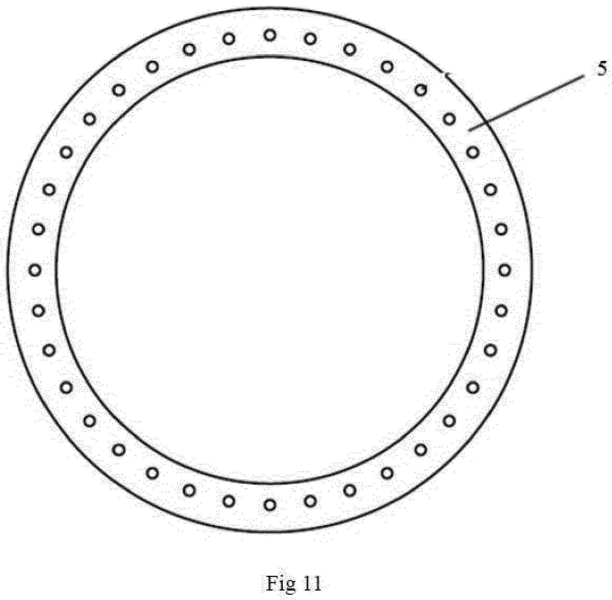

As shown in Fig. 7 through Fig. 9, this embodiment is largely the same as the First Embodiment. The differences are:
One embodiment is the internal stator core of an electric motor. It comprises a grain-oriented silicon steel sheet group (1), and fixation sheets (5) for the internal stator core secured on both sides of the grain-oriented silicon steel sheet group (1). The grain-oriented silicon steel sheet group (1) is formed by stacking the forward oriented silicon steel sheet layers (2) and the reverse oriented silicon steel sheet layers (3) successively. Fig.8 shows the arrangement of the forward oriented silicon steel sheet layers (2), and Fig. 9 shows the arrangement of the reverse oriented silicon steel sheet layers (3). The forward oriented silicon steel sheet layers (2) and the reverse oriented silicon steel sheet layers (3) are stacked successively. The specific number of layers may be configured according to the actual situation of the electric motor. As shown in Fig. 8 through Fig. 11, the forward oriented silicon steel sheet layers (2) and the reverse oriented silicon steel sheet layers (3) are both formed by arranging and enclosing the grain-oriented silicon steel sheets (4) in a circular manner, with the grain orientation being in the radial direction. There are air gaps (7) designed between each grain-oriented silicon steel sheet (4) in the forward oriented silicon steel sheet layers (2) and in the reverse oriented silicon steel sheet layers (3), so they do not linked with each other. As shown in Fig. 10, the arrow indicates the grain orientation of the stamping parts of the grain-oriented silicon steel sheets (4). There are fixation holes (6) designed on each grain-oriented silicon steel sheet. The forward oriented silicon steel sheet layers (2) and reverse oriented silicon steel sheet layers (3) are skewered through the fixation holes (6) on the grain-oriented steel sheets (4), and then secured to the fixation sheet of the internal stator core (5). Preferably, all forward oriented silicon steel sheet layers (2) and reverse oriented silicon steel sheet layers (3) are connected and secured to the fixation sheet (5) of the internal stator core by skewering with rivets (8) shown in Fig. 12. The working principle in this embodiment is the same as that in First Embodiment.

The description stated above serves only the preferred embodiments of the invention. It should be noted that, the invention will be understood by those skilled in the art that various improvements and elaborations may be made therein without departing from the spirit and scope of the invention. Such improvements and elaborations shall be deemed to be in the scope of protection of the present invention.

### List of Reference Numerals

- 1: Grain-oriented Silicon Steel Sheet Group
- 2: Forward Oriented Silicon Steel Sheet Layer
- 3: Reverse Oriented Silicon Steel Sheet Layer
- 4: Grain-oriented Silicon Steel Sheet
- 41: Yoke Part
- 42: Field Pole Part
- 5: Fixation Sheet
- 6: Fixation Hole
- 7: Air Gap
- 8: Rivet

## Claims

1. A high efficiency electric motor stator manufactured with grain-oriented silicon steel sheets, comprising:
a grain-oriented silicon steel sheet group (1);
fixation sheets (5) for a stator core secured on two sides of the grain-oriented silicon steel sheet group (1), the grain-oriented silicon steel sheet group (1) is formed by stagger-stacking forward oriented silicon steel sheet layers (2) with reverse oriented silicon steel sheet layers (3), the forward oriented silicon steel sheet layers (2) and the reverse oriented silicon steel sheet layers (3) are both formed by arranging and enclosing grain-oriented silicon steel sheets (4) in a circular manner, with a grain orientation being in a radial direction; and
fixation holes (6) designed on each grain-oriented silicon steel sheet (4), the forward oriented silicon steel sheet layers (2) and the reverse oriented silicon steel sheet layers (3) are skewered through the fixation holes (6) on the grain-oriented steel sheets (4), and then secured to the fixation sheet (5) of the stator core.

2. The high efficiency electric motor stator manufactured with grain-oriented silicon steel sheets as claimed in Claim 1 wherein
all forward oriented silicon steel sheet layers (2) and reverse oriented silicon steel sheet layers (3) are connected and secured to the fixation sheets (5) of the stator core by skewering with rivets (8).

3. The high efficiency electric motor stator manufactured with grain-oriented silicon steel sheets as claimed in Claim 2 wherein
there are air gaps (7) between each grain-oriented silicon steel sheet (4) in the forward oriented silicon steel sheet layers (2), and between each grain-oriented silicon steel sheet (4) in the reverse oriented silicon steel sheet layers (3).

4. The high efficiency electric motor stator manufactured with grain-oriented silicon steel sheets as claimed in Claim 1, 2 or 3 wherein
the grain-oriented silicon steel sheet (4) comprises a yoke part (41) and a field pole part (42), the yoke part (41) and the field pole part (42) are integrally formed, the yoke part (41) is an arc-shaped sheet, and the field pole part (42) is provided to one side of the yoke part (41), forming an eccentric structure, and an orientation of the field pole part (42) is the same as a radial direction of the yoke part (41).

5. The high efficiency electric motor stator manufactured with grain-oriented silicon steel sheets as claimed in Claim 4 wherein
the yoke part (41) of the grain-oriented silicon steel sheet (4) in the forward oriented silicon steel sheet layer (2) staggers across the layers with the yoke part (41) of the grain-oriented silicon steel sheet (4) in the reverse oriented silicon steel sheet layer (3), the field pole part (42) of the grain-oriented silicon steel sheet (4) in the forward oriented silicon steel sheet layer (2) overlaps the field pole part (42) of the grain-oriented silicon steel sheet (4) in the reverse oriented silicon steel sheet layer (3).

6. The high efficiency electric motor stator manufactured with grain-oriented silicon steel sheets as claimed in Claim 5 wherein
a length of the field pole part (41) is greater than a radial width of the yoke part (41).
